# EUROPÄISCHE PATENTSCHRIFT

(11) **EP 1 577 806 B1**
(45) Veröffentlichungstag und Bekanntmachung des Hinweises auf die Patenterteilung: **19.12.2007**
(21) Anmeldenummer: 04017073.0
(22) Anmeldetag: 20.07.2004
(51) Int. Cl.: G06Q 50/00, H04L 29/06

(54) **Objektfilter zur Organisation der Verteilung von Postsendungen**
Object filter for organising the distribution of postal items
Filtre d'objet pour la distribution des envois postaux

(30) Priorität: 20.03.2004 DE 102004013806
(43) Veröffentlichungstag der Anmeldung: 21.09.2005
(73) Patentinhaber: Böwe Bell + Howell GmbH, 61191 Rosbach v.d.H (DE)
(72) Erfinder: Irgenfried, Stephan, 94474 Vilshofen (DE); Franklin, Garland, Watauge, TX 76148 (US); Schlinger, Gregor, 91224 Pommelsbrunn (DE)
(74) Vertreter: Schrooten, Rolf

(56) Entgegenhaltungen:
- EP-A- 1 111 532
- US-A- 5 619 648
- US-A1- 2002 032 623

## Beschreibung

Die vorliegende Erfindung betrifft ein Verfahren zur automatischen Organisation mehrerer über ein Netzwerk zur Datenübertragung gekoppelter Subsysteme, insbesondere zur Organisation der Verteilung von Postsendungen in einem Briefzentrum, wobei ein Subsystem ein Modul und/oder einen Prozess aufweist, wobei für die Kopplung eines Subsystems an das Netzwerk jeweils eine Schnittstelle vorgesehen ist.

Über lange Zeit wurde das Sortieren von Briefen rein mechanisch durchgeführt. Mit steigendem Briefaufkommen musste allerdings die Zuverlässigkeit der Sortierer und der zum Teil filigranen mechanischen Komponenten schwinden. Zur Steigerung der Effektivität der Anlagen wurden daher schon bald Computer eingesetzt. So gingen die seinerzeit rudimentären Möglichkeiten der elektronischen Datenerfassung und der Bildbearbeitung einher mit der Integration computergesteuerter Datentechnik in den Sortierprozess. Mit dem Computer konnte zunächst eine Rationalisierung, zudem eine Verkürzung der Brieflaufzeiten und letztendlich eine Steigerung der Zuverlässigkeit bei der Zustellung erreicht werden. Die Produktivität und die Effizienz der Briefzentren stieg entsprechend an. Die Umstellung auf die computerunterstützte Sortierung fiel jedoch in eine Zeit, in der die Echtzeit-Datenverarbeitung und die rechnergestützte Bildverarbeitung insbesondere für Großanwendungen noch in den Kinderschuhen steckte. So entwickelten sich Systeme, die ein Konglomerat von EDV-Komponenten der letzten Generationen bilden und deren Architektur eine nur eingeschränkte Flexibilität aufweist.

Problematisch an den bekannten Systemen ist, dass Erweiterungen einerseits aus wirtschaftlichen Gründen und nicht zuletzt an der komplexen Schnittstellentechnik scheitern. Grenzen des frühen Konzeptes werden vielerorts zu Hemmnissen. Doch sind diese Erweiterungen für die Zukunft global operierender Weltunternehmen von Bedeutung, um im zunehmenden Wettbewerb konkurrierender Dienstleister bestehen zu können. Der dringend notwendige Datenaustausch zwischen den Briefzentren lässt sich auf den vorhandenen Strukturen kaum intensivieren. Zudem verhindert die Geschlossenheit der bekannten Systeme, dass neue zeitgemäße Dienstleistungen angeboten werden können und dass eine weitere Produktivitäts-und Effizienzsteigerung möglich ist. Weiterhin machen es die meist proprietären Strukturen der Systeme unmöglich, dass Erweiterungen und Ersatzbeschaffungen unabhängig vom Hersteller ausgeschrieben werden können.

Aufgabe der vorliegenden Erfindung ist es nunmehr, ein Verfahren zur Organisation eines Systems, insbesondere eines Systems zur Verteilung von Postsendungen in einem Briefzentrum, zu schaffen, das sich technisch einfach und kostengünstig umsetzen lässt, das eine hohe Flexibilität und Modularität aufweist und das bei hoher Geschwindigkeit eine zuverlässige Verteilung respektive Sortierung der Sendungen gewährleistet. Zudem ist es Aufgabe der vorliegenden Erfindung, eine Vorrichtung zu schaffen, die ein solches Verfahren umsetzt.

Diese Aufgaben werden durch das Verfahren mit den kennzeichnenden Merkmalen des Anspruch 1 und das System nach Anspruch 14 gelöst. Die jeweiligen Unteransprüche beinhalten besondere Ausführungsformen der Erfindung, wobei auf deren Inhalt ausdrücklich Bezug genommen wird.

Der wesentliche Grundgedanke der Erfindung liegt zunächst darin, von der bislang bekannten zentralen Steuerung der einzelnen über ein Netzwerk verbundenen Applikationen hinzukommen zu einer Architektur, bei der jede Applikation ein dezentrales Subsystem mit eigener Intelligenz ausbildet. Die Subsysteme sind über ein gemeinsames Kommunikationsnetz verbunden und werden ausgestattet mit dezentral laufenden Programmen und Datenspeichern. Auch wenn die Subsysteme physikalisch getrennt sind, gehören sie "logisch" zusammen und koordinieren nach einem übergeordneten Plan. Erfindungsgemäß wird jedes Subsystem vermittels einer integrierten Filterfunktionen, dem "Objektfilter", mit dem Netz verbunden. Durch diesen Objektfilter verläuft der Datenstrom zwischen dem Netzwerk und dem Subsystem. Der Objektfilter untersucht dabei die im Netz übertragenen Daten auf deren Relevanz für das Subsystem und leitet sie entsprechend ihrer Relevanz weiter. Die Daten, die für das Subsystem von geringer oder ohne Relevanz sind, werden zurückgehalten. Andererseits gelangen die vom Subsystem generierten Daten über den Objektfilter in das Netz. Dabei wird der Objektfilter von einem Mikrocomputer realisiert, auf dem ein entsprechendes Programm läuft und der dem jeweiligen Subsystem respektive der Schnittstelle zugeordnet ist. Jedes der am Netz angeschlossenen Subsysteme kann damit einen Pool von Informationen bilden, die dem Gesamtsystem zur Verfügung gestellt werden. Entsprechend der Erfindung kommunizieren eine große Zahl unabhängiger Prozesse oder Entitäten miteinander über den Austausch von Nachrichten.

Der Objektfilter übernimmt eine Reihe von Funktionen. So sammelt er selbständig Daten anderer Subsysteme und stellt sie dem ihm zugeordneten Subsystem als Datenpaket bereit. Er kann auch selbständig Daten von anderen Subsystemen sammeln, die von dem ihm zugeordneten Subsystems angefordert werden. Ein Objektfilter kann auch aktuelle Information über das ihm zugeordnete Subsystem, insbesondere über Leistungszahlen und Kenngrößen, sammeln und diese Information anderen Subsystemen, insbesondere einer administrativen oder grafischen Komponente, über das Backbone zur Verfügung stellen.

Die erfindungsgemäße Architektur hat das Ziel, Modifizierbarkeit durch die Entkopplung von Berechnungen in diversen Rechnern zu erreichen. Die einzelnen Komponenten tauschen Daten nicht durch direkte Kontrolle aus, sondern es werden Nachrichten als Datenmedium verwendet, um Informationen zu bekannten oder unbekannten Komponenten zu vermitteln. Einzelne System-Komponenten geben Informationen bekannt ("publish"), die sie mit interessierten, aber ihnen unbekannten Komponenten ihrer Umgebung teilen wollen. Die Interessierten Komponenten reagieren auf eine für sie bestimmte Art von Information ("subscribe"). Publisher- und Subscriber-Komponenten kennen einander nicht und werden nur indirekt über ein Event-System miteinander gekoppelt, wobei der Objektfilter das Event-System realisiert. Dieses ermöglicht die Kommunikation zwischen den Komponenten, indem es bei Auftreten einer entsprechenden Nachricht oder eines Ereignisses die interessierte Komponente (den Subscriber) davon unterrichtet. Dies kann über ein "Broadcasting", also der Verteilung von Ereignissen an alle angeschlossenen Komponenten oder beim Load-Balancing zur Verteilung von Aufgaben innerhalb eines Gerätetyps, an bestimmte Komponenten gerichtet werden.

Im Publish-/Subscribe-Paradigma der Erfindung registrieren sich Komponenten durch spezifische Konfiguration des Objektfilters für bestimmte Arten von Informationen und Ereignissen, an denen sie interessiert sind. Ebenfalls bestimmt die Konfiguration des Objektfilters die Bekanntgabe von Informationen, die sie zur Verfügung stellen können. Die Information wird publiziert, indem das Event- System die Nachrichten dann an alle im System vorhandenen Komponenten verteilt; Das geschieht über "Broadcast-Technik" und verringert dadurch verwaltungsintensive Aufgaben, um Systemerweiterungen zu ermöglichen, die nur durch die Bandbreite der Netzwerkverbindung eingeschränkt ist.

Da der einzelne Prozess (z. B. OCR, Arbitrator, Tracking PC, etc.) nicht mehr nur ein datenlieferndes Modul ist, das seine Daten an ein zentrales System abliefert und von dort Daten abholt, sondern erfindungsgemäß nunmehr gemeinsam mit dem Objektfilter über die gesamte "Lebensdauer" der Sendung im Prozess singulär die Daten für Folgeprozesse bereitstellt, ist es vorteilhaft, die Kombination aus Subsystem und Objektfilter als Entität zu definieren. Im Gegensatz zu Prozessen transportieren Entitäten zusätzlich die prozess-individuellen Daten der Sendungen während der gesamten Durchlaufzeit und stellen diese jederzeit für anfordernde Prozesse bereit. Eine solche Entität stellt eine im System einzigartige Intelligenz dar, welche die Leistungsfähigkeit oder die Funktionalität des Systems steigert, ohne dass Änderungen am System selbst vorgenommen werden müßten.

Dabei gibt es aktive und passive Entitäten. Aktive Entitäten ermitteln neue Informationen und stellen diese bereit. Diese Informationen können innerhalb des Backbones wieder abgerufen werden. Ein aktiver Prozess kann also Ereignisse auslösen aufgrund neuer Informationen, die er aus der Sendung gewonnen hat. Passive Entitäten sind reine Datensammler. Sie reagieren auf Ereignisse aktiver Prozesse und können Daten von Entitäten entnehmen. Sie sind nicht befähigt, Ereignisse auszulösen.

Vorteilhafterweise wird mit jeder Sendung ein Objekt erzeugt, das alle Sendungs-Merkmale, wie Eigenschaften, Ereignisse und Methoden, abbildet. Dabei wird die Sendung nicht nur als zweidimensionales Image mit kameratechnisch bedingten Schwächen, sondern als Informationsträger in seiner Gesamtheit betrachtet. Die Informationen zu jeder Sendung können je nach Schnittstellenausprägung im gesamten Prozess, von der Adressdatenbank über Drucker und Kuvertierer, bis hin zur Responseauswertung gefüllt und jederzeit zu bestimmten Aktionen verwendet werden. Insbesondere ist ein zu verarbeitendes Objekt während der gesamten Lebensdauer zur Verarbeitung an ein Subsystem gebunden und wird von anderen Subsystemen nicht bearbeitet.

Die Vorteile der Einführung von Entitäten liegen darin, dass ein Datensatz genau einmal im System vorgehalten wird, nämlich beim datenliefernden Prozess, dem sogenannten Publisher. Dies bietet volle Datenintegrität mit den Merkmalen logischer Korrektheit, Gültigkeit, und Eindeutigkeit des Datensatzes. Zudem können beliebig viele Teilergebnisse eines Publishers lokal generiert werden und müssen nicht zentral verwaltet werden. Der Folgeprozesse ("Subscriber") kann ausschließlich auf die für seinen Prozess notwendigen Quelldaten im System zugreifen. Ein weiterer Vorteil ist, dass ein Datensatz, Bild oder Teilergebnis nur auf Anforderung eines Subscribers das Netz belastet. Jeder Subscriber arbeitet mit dem aktuellen und eindeutigen Datensatz. Die Betriebsdatenerfassung oder ein beliebiger Server, als einzigartiger Subscriber, erfasst somit ausschließlich reale Prozessdaten. Zudem kann jeder Nutzer sofort auf die alle aktuellen Information zugreifen.

Ein Vorteil der erfindungsgemäß auf die einzelnen Subsysteme respektive Entitäten verteilten Intelligenz liegt darin, dass der modulare Aufbau einer Architektur mit unabhängigen Komponenten unterstützt wird. Ein weiterer Vorteil derartiger modular aufgebauter Systeme liegt in dem geringen Verkabelungsaufwand. Mit den heute zur Verfügung stehenden Software-"Tools" ist die Programmierung solcher Systeme mit nur geringem Aufwand verbunden. Auch die Integration und die Inbetriebnahme neuer Subsysteme gestaltet sich komfortabel. Die erfindungsgemäße Struktur geht mit einer hohen Ausfallsicherheit einher und ermöglicht einem Ausgleich örtlicher Leistungsspitzen.

Die Architektur mit den über die Objektfilter an das Netz angebunden intelligenten Subsystemen respektive Entitäten bringt insofern einen Freiraum an Modularität, als Datenkomponenten und Maschinen auch modular in Funktionen gesplittet werden können. Zudem ist die Möglichkeit zur Vollautomatisierung gegeben, so dass Handarbeitsplätze in Teil- oder Vollautomation gewandelt werden können. Die Architektur unterstützt eine uneingeschränkte Skalierbarkeit für Maschinen und Datenprozesse. Gleichzeitig wird die Möglichkeit maximiert, neue Datenprozesse und Maschinen aufzunehmen und ohne Programmieraufwand davon zu profitieren.

Neben der beschriebenen dezentralen Datenverarbeitung ist ein weiterer Aspekt der Erfindung die zentrale Bereitstellung der Information. Diese bietet einen schnellen Zugriff auf Echtzeit- und Nicht-Echtzeit-Prozessdaten. Vorteilhafterweise ist dazu eine zentrale Datenbank vorgesehen, die über das Netz zugänglich ist, während alle anderen Prozesse für die Hard- und Software, für die Verwaltung und für die Mensch-Maschine-Schnittstelle dezentral als modulare Entitäten organisiert werden. Diese Architektur bietet eine maximale Erweiterbarkeit und Skalierbarkeit, sowie ein betriebsweites "Load-Balancing", das zu einer Entlastung stark belasteter Systeme führt.

Die Erfindung ermöglicht es im Fall der Briefsortierung, beliebige Aufgabenstellungen zielorientiert durchzuführen. So kann z.B. eine "ID-Tag"-Verarbeitung oder eine On-und Offline-Kodierung unterstützt werden. Mit derartigen ID-Tags, auf denen Daten gespeichert sind, können einzelne Sendung identifiziert werden. Zudem können auf der Basis aller Daten einer Sendung entsprechende Sortierentscheidungen getroffen werden. Weiterhin können Prozessdaten betriebsweit für die Planung und Steuerung von Personal, Maschinen, Logistik und Betriebsdatenerfassung quasi in Echtzeit mit voller Datenintegrität bereit gestellt werden. Die Erfindung ermöglicht außerdem den Anschluss beliebiger Systeme, wie insbesondere Intranet-Servern oder Systemen anderer Briefzentren, an das Netz.

Mit der Erfindung können Workflows optimiert und damit die Produktivität gesteigert werden. Dabei bietet es sich an, alle an der Postlogistik beteiligten Einheiten zu vernetzen und in einen gemeinsamen Workflow einzubinden. Auch ist es von Vorteil, dass jederzeit alle Informationen, die zu einer bestimmten Sendung verfügbar sind, genutzt werden können, um die jeweilige Sendung möglichst schnell, kostengünstig, transparent und sicher an den Adressaten zu liefern. Mit der Erfindung lassen sich die Informationen über die einzelnen Sendungen ohne Zeitverluste auswerten und außerdem alle in der Wertschöpfungskette vorhandenen Kapazitäten nutzen. Jedes Briefzentrum kann bei Nutzung der Erfindung seine Kapazitäten mit denen weiterer Briefzentren intelligent teilen, wobei die standardisierten Schnittstellen helfen.

Weitere Vorteile liegen darin, dass neue Dienstleistungen geschaffen und die bestehende Kundenbindung vertieft werden kann. Im Hinblick auf die Schaffung neuer Dienstleistungen können weitere Informationsquellen zu Sendungen definiert und genutzt werden, um die Flexibilität bei der Bearbeitung der Sendungen im Sinne künftiger Aufgaben und Anforderungen zu erhöhen. Außerdem lassen sich ServiceLeistungen und Produkte anbieten, die von einer transparenten Sendungsverfolgung bis hin zur direkten Anbindung externer Partner reichen.

Neben dem Objektfilter liegt ein weiterer wichtiger Gesichtspunkt der Erfindung in der Einführung eines speziellen Netzes, das sich eines schnellen "Backbones" als grundlegender Struktur bedient. An dieses Backbone koppeln die Subsysteme modular an, wobei die Ankopplung jeweils über einen Objektfilter als intelligente Schnittstelle mit dezentraler Logik führt. Über den Objektfilter gelangen alle Daten aus dem Backbone zum Subsystem (Entität) und umgekehrt.

Erfindungsgemäß ist jedes angeschlossene Subsystem selbst verantwortlich für seine Arbeitsauslastung und dafür, sich die lokal fehlenden, aber im Gesamtsystem vorhandenen Zusatzinformationen zu beschaffen. Das heißt, dass jeder Objektfilter den Informations- und Datenaustausch in Volumina und Zeit bestimmen kann. Die einzelnen Objektfilter vor jedem Subsystem steuern die Auslastung innerhalb einer Funktions-Gruppe, beispielsweise den "Briefzentrum Ausgang -Nachsendung" (BZA-NS) selbstständig. Die erfindungsgemäße Architektur ist dabei auf eine reduzierte Netzwerkbelastung konzipiert. So werden nur Daten zu Sendungen und Bilder transportiert, die auch tatsächlich von einer Applikation respektive einem Subsystem benötigt und angefordert werden Andererseits können Bilder oder Bildsegmente von hoher Qualität vorgehalten werden, die im Bedarfsfall von bestimmten Subsystemen abgerufen und genutzt werden.

Der Aufwand zur Integration einzelner Subsysteme hält sich in Grenzen. Für neue Subsysteme muss vor der Integration die Objektfilter- Konfiguration geschrieben werden. Die vorhandenen Objektfilter-Konfigurationen, die auf die Ergebnisse der neuen Subsysteme zugreifen sollen, müssen entsprechend erweitert werden. Die Netzwerklast und die übrigen Ressourcen werden vor der Installation eines neuen Subsystems überprüft. Letztendlich werden neue Masken für die Anwendersteuerung erstellt.

Wie schon angesprochen, bietet die Erfindung u.a. die Möglichkeit der ID-Tag-Verarbeitung, der On- Offline-Kodierung und der Sortierentscheidungen auf der Basis aller Eigenschaften einer Sendung, wie dem Gewicht, der Adresse, dem Sender, der erkannten Briefzusatzleistung und der Entgeldinformation als Beispiele. Eine betriebsweite Prozessdatenbereitstellung für die Planung und Steuerung von Personal, Maschine, Logistik und Betriebsdatenerfassung werden in Quasi- Echtzeit mit voller Datenintegrität bereit gestellt. Zudem ist der Anschluss anderer heterogen verteilter Systeme, wie z. B. Intranet- Server oder das System eines anderen Briefzentrums ermöglicht.

### Nachfolgend wird die Erfindung anhand der Figuren 1 bis 3 näher erklärt. Es zeigen:

- **Figur 1**: ein Schema der erfindungsgemäßen Architektur,
- **Figur 2**: die Organisation einer Entität und
- **Figur 3**: ein Schema zweier am Backbone angeschlossener Geräte.

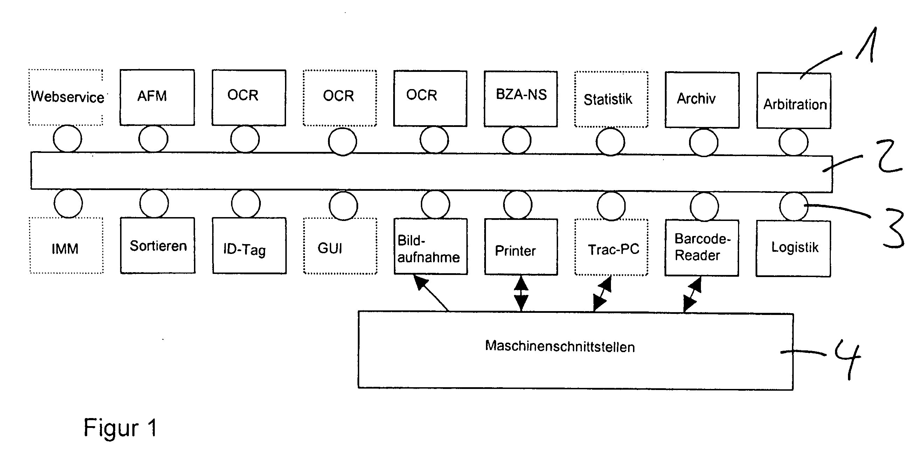

In Figur 1 ist die unabhängige Komponenten-Architektur dargestellt. Die einzelnen Entitäten 1 sind über jeweils einen Objektfilter (OF) 3 an das Netzwerk (Backbone) 2 angeschlossen. Das Backbone 2 ist als Netzwerkkabel mit direkter Verbindung (über Hub oder Switch) zu angeschlossenen Netzwerkkarten ausgebildet. An das Backbone angeschlossen sind u.a. Mensch-Maschine-Schnittstellen (Graphical User Interface, GUI), Ein proprietäres Image Management Module (IMM), Einrichtungen für die Optical Character Recognition (OCR), Entitäten für den sog. Briefzentrum-Abgang Nachsendeanträge (BZA-NS) und Absenderfreistemachungsleser (AFM). Von den Entitäten 1 sind einige, wie die Applikationen und Prozesse "aktiv", während andere, wie die Datenserver, "passiv" sind. Alle Daten gelangen über Objektfilter in den Backbone, von dem sich jeder Klient- Prozess über eigene Objektfilter die für ihn wichtigen Daten abgreift und diese nach Bearbeitung wieder an den Backbone zurücksendet. Der Kasten 4 stellt die Maschinen-Schnittstellen dar.

In den Objektfiltern manifestiert sich die dezentralisierte Logik der Subsysteme. Der Objektfilter ist dabei jeder Entität vorgeschaltet und reduziert den Datenstrom. Er führt die Aufgaben betreffend die Kommunikation und die Datenverteilung aus und speichert die von der Sendung individuell gewonnenen Prozessdaten über die Lebensdauer der jeweiligen Sendung. Er führt sämtliche Aufgaben zur Lastverteilung innerhalb einer Applikationsgruppe durch und handhabt ein intelligentes Queuing. Zudem behandelt er Datenanfragen anderer Subsysteme und beliefert diese mit den angeforderten Daten.

Der zwischen dem Netzwerk und jedem einzelnen Subsystem angeordnete Objektfilter kann für jedes Subsystem konfiguriert werden und ist in seinem Verhalten einstellbar. Die Prozesse werden über eine "Middleware" an das Backbone angeschlossen, um die Kommunikationssoftware von der Hardware zu entkoppeln. Der Objektfilter ist als eine plattformunabhängige Bibliothek zu integrieren und wird somit Teil des Prozesses. Er handhabt alle Kommunikationsaufgaben und den Datentransfer zwischen den Komponenten mittels "Publish" und "Subscribe". Grundsätzlich reagiert der Objektfilter auf bestimmte Nachrichten-Typen, die vorher konfiguriert wurden. Wenn eine Applikation einen Datensatz über das Netzwerk schickt, vergleicht der Objektfilter die Nachricht mit seinem vorkonfigurierten Regelwerk, um festzustellen, ob er diesen Datensatz bearbeiten muss. Falls ja, übergibt der Objekt-Filter eine entsprechende Information an "sein" Subsystem um diese Anforderung für den Lastausgleich mit anderen Subsystemen zu synchronisieren.

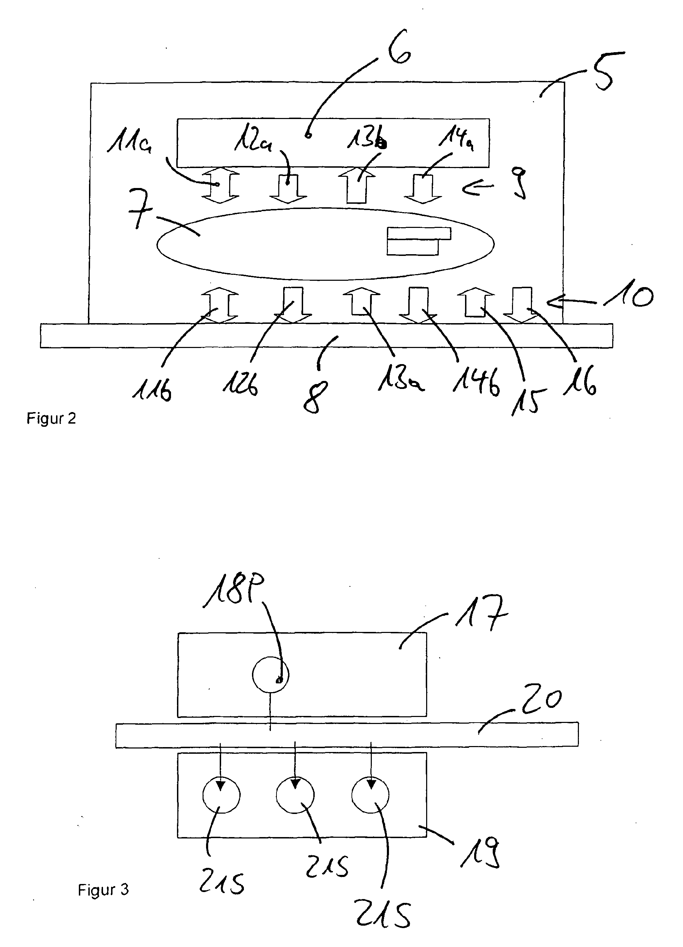

Nachfolgend wird der Datenaustausch und die damit verbundenen Aufgaben anhand der Figur 2 dargestellt. Figur 2 zeigt einen "Prozess" 6, beispielsweise ein Gerät, den Objektfilter 7 und das Backbone 8, wobei der Komplex aus Prozess 6 und Objektfilter 7 die Entität 5 bildet. Zwischen dem Prozess 6 und dem Objektfilter 7 ist eine erste Schnittstelle 9 angeordnet, während sich zwischen dem Objektfilter 7 und dem Backbone 8 die andere erfindungswesentliche Schnittstelle 10 befindet, über die der Nachrichten- und Datenaustausch abgewickelt wird. Die Pfeile symbolisieren den Austausch über die Schnittstellen. Der Index [a;b] kennzeichnet die zeitliche Folge, wobei [a] der Auslöser ist und [b] folgt. Der Index [1..n] bedeutet, dass mehrere Austauschaktionen möglich sind.

Im Schritt 11 a fordert der Prozess Objekte, also zu bearbeitende Sendungen, vom Objektfilter an, wobei mehrere Objekte angefordert werden können. Bei 11 b prüft der Objektfilter Ereignisnachrichten am Backbone und fordert nach Synchronisation als Subscriber Objekte vom Publisher (hier nicht sichtbar). Nachdem der Publisher dem Subscriber (Objektfilter) ein Objekt bestätigt, wird dem Prozess dieses zugeteilt. Je nach Größe der Queue können mehrere angefordert werden. In 12a fordert der Prozess von seinem Objektfilter Daten, z. B. Frankierwert und Gewicht, die er zur Bearbeitung des Objektes benötigt an. Mit 12b kennt der Objektfilter die Datenquelle und fordert diese Daten von einer bestimmten Entität über den Backbone an. Bei 13a empfängt der Objektfilter die Daten, die er angefordert hat, und leitet diese an den Prozess weiter. Der Prozess erhält bei 13b die Daten und beginnt mit der Bearbeitung. Im Schritt 14a hat der Prozess hat ein (Teil-)Ergebnis ermittelt und übergibt dies dem Objektfilter. Der Objektfilter speichert diese (Teil-)Ergebnisse und prüft mittels seinen Event-Managers, ob hieraus ein Ereignis für andere Gerätetypen abgeleitet werden kann. Wenn ja, erfolgt 14b und der Objektfilter sendet ein Ereignis auf den Backbone. Zeitlich unabhängig können parallel Daten von anderen Entitäten angefordert werden. Zeitlich unabhängig von den Schritten 11 bis 14 können parallel Daten von anderen Entitäten angefordert 15 und übertragen 16 werden.

Nachfolgend wird die Kommunikation der Objektfilter mit Zeit- und Nachrichtenfolge veranschaulicht am Beispiel eines Lesersystems, das Nachsendeanträge (NS) in dem Durchlauf für "Briefzentrum-Abgang" (BZA) bearbeitet.

Dazu aktiviert der von einem PC realisierte BZA-NS-Leser seinen Objektfilter, der dem Netzwerk meldet, dass ihm ein spezieller Applikations-Typ zugewiesen ist. Dieser kann durch einen bestimmten Durchsatz, eine Queue-Size, eine Speed, eine Maschinen- Nummer und einen Status definiert sein. Die entsprechende Information bezieht der Objektfilter aus einer Konfigurationsdatei respektive aus dem Status des Verfahrens. Der Objektfilter wartet eine definierte kurze Zeit (Heartbeat-Zyklus) darauf, ob sich noch andere BZA-NS-Leser im Netzwerk melden. Sobald der Objektfilter den Heartbeat vom anderen Leser erhält, weiß er, dass ein anderer Leser existiert. Zudem kennt er nun auch dessen oben benannte Daten. Nach wenigen Sekunden sendet der erste BZA-NS-Leser eine Nachricht mit dem aktualisierten Status. Damit erkennt der andere Leser, dass der erste BZA-NS-Leser bereit ist Sendungen zu bearbeiten.

Sobald ein Zusammenstellungsdatensatz (Summary Message) eintrifft, der die Objektfilter passiert, wird ein Leser, beispielsweise der mit der kleinsten Zahl für die Queue-Size, diese Sendung bearbeiten. Sobald einer der Leser die Bearbeitung der Sendung übernommen hat, sendet er eine Nachricht mit der aktualisierten Queue-Size. Wenn der Leser für das Heartbeat-Intervall keine Arbeit hat, wird er dennoch eine Nachricht absetzen, damit alle Prozesse im System wissen, dass er nach wie vor online ist. Wenn das Leser-Subsystem nach dem Distribution-Code für die Sendungsdaten fragt, wird der Objektfilter den Daten-Set von der Quelle des Summary Message abrufen. Der Nachweis der Informationsquelle ist dort enthalten. Darin ist vermerkt, welche Metadaten verfügbar sind oder welches Daten-Set an welcher Adresse abrufbar ist. Der Zusammenstellungsdatensatz enthält genügend Information für den Objektfilter, damit dieser die Informationsquelle auffinden kann. Wenn das Optical Character Recognition (OCR)- Subsystem das Bild (Image) der Sendung benötigt, wird sie den Objektfilter danach befragen. Da die Bilder in einem anderen Daten-Set lagern, wird der Objektfilter dieses Set nur dann beschaffen, wenn es die Applikation auch wirklich braucht. Sobald die Leser-Applikation ihre Antwort in einer Nachricht an den Objektfilter verpackt, muss der Objektfilter die zusätzlichen Felder prüfen und feststellen, ob die Daten mit irgendeinem der Typen übereinstimmen. Entsprechend wird der Zusammenstellungsdatensatz vom Objektfilter modifiziert. Sobald der Objektfilter deaktiviert wird, wird er eine Abschlussnachricht versenden mit einem Status- Flag, das besagt, dass er nicht länger online ist.

Es ist auch möglich, dass fehlende Sendungs-Daten von einer Applikation ergänzt werden, was den Informationsgehalt und evtl. den "Status" der Sendung ändert und was für Folgeprozesse relevant ist. Ein solches Ereignis wird als "Nachricht" vom Publisher-Objektfilter übertragen.

Zu seiner Konfiguration liest die Objektfilter -Bibliothek Informationen aus einer oder mehreren Konfigurationsdateien ein, in denen Informationen über den jeweiligen Objektfilter gespeichert sind. Dazu gehören u.a. Prozess-Identifikations-Daten, sowie Filter-und Speicher Information.

Ein weiterer wichtiger Aspekt der Erfindung ist die Abstimmung von Ereignissen innerhalb desselben Gerätetyps (Synchronisation). Diese wird nachfolgend anhand der Figur 3 vorgestellt:

Eine Entität eines ersten Gerätetyps 17 hat Daten (Ergebnisse oder Teilergebnisse) ermittelt und übergibt diese seinem Objektfilter, hier 18P wobei P für "Publisher" steht. Der Objektfilter erkennt, dass die bestehenden Daten/Eigenschaften der Sendung für den Gerätetyp 17 Eingangsvoraussetzungen erfüllen, womit Gerätetyp 19 seinen Prozess beginnen kann. 18P erzeugt daraufhin ein Ereignis und sendet das über das Backbone 20 (Pfeile).

Alle Entitäten respektive deren Objektfilter (21 S, wobei S für "Subscriber" steht) des Gerätetyps 19 empfangen die Message und beginnen untereinander den Subscriber zu ermitteln. Die geschieht über die Vorgaben des definierten Load-Balancing. In diesem Fall wird der links angeordnete Subscriber innerhalb der Objektfilter des Gerätetypes 19 ermittelt. Der Subscriber wird vom Publisher bestätigt. Das bedeutet, dass die Entität des Gerätetypes 19 vom Publisher und von anderen datenvorhaltenden Entitäten aufgrund dieses Ereignisses Daten abrufen darf.

Unabhängig von dieser Vorgehensweise kann aber die Situation eintreten, dass zwei Objektfilter eines Gerätetypes versuchen, eine Sendung gleichzeitig zu bearbeiten. Dies kann z. B. durch Netz-Laufzeitprobleme während des Load-Balancing auftreten. In dieser Situation muss der Server, also der Objektfilter, der das Ereignis gesendet hat (Publisher) entscheiden, welcher Subscriber, also welche Entität, die Sendung bearbeiten soll.

Die Lastverteilung kann bei verteilten Subsystemen statisch und/oder dynamisch erfolgen. Die Verfahren können dabei je nach Gerätetyp oder Applikationsgruppe zielgerichtet eingesetzt werden. Die Verteilung von Aufträgen innerhalb einer Gerätegruppe übernehmen die Objektfilter. Eine dynamische Verteilung richtet sich nach verschiedenen Kriterien. So sind der Durchsatz, die durchschnittliche Verarbeitungszeit, die Gerätenummer und/oder die Prioritätszahl feststehende Größen, während die "remaining time" eines Lastpaketes, die Eigenschaften einer Sendung und die Anzahl der Objekte in der Queue des Gerätes flexible Größen sind. Beide Arten von Größen tragen zur dynamischen Lastverteilung durch die Objektfilter bei. Eine statische Verteilung ist sinnvoll bei einem Arbitrator, also einer Applikation, die Ergebnisse gleichen Typs von ergebnisliefernden Applikationen vergleicht und bewertet. Dabei werden die Sendungen nach genauen Vorgaben auf die Entitäten innerhalb des Gerätetyps verteilt.

## Patentansprüche

1. Verfahren zur automatischen Organisation mehrerer über ein Netzwerk zur Datenübertragung gekoppelter Subsysteme, insbesondere zur Organisation der Verteilung von Postsendungen in einem Briefzentrum, wobei ein Subsystem ein Modul aufweist, wobei für die Kopplung eines Subsystems an das Netzwerk jeweils eine Schnittstelle vorgesehen ist,
**dadurch gekennzeichnet,**
**dass** die Schnittstelle von einer dem Subsystem zugeordneten dezentralen Computereinheit organisiert wird, die eine Filterfunktion in Form eines Objektfilters ausübt, wobei der Datenstrom, der kein E-Mail Datenstrom ist, zwischen dem Netzwerk und dem Modul durch die dezentrale Computereinheit läuft, wobei einzelne Module Daten in das Netzwerk geben, die sie ihnen unbekannten, an den Daten interessierten Modulen mitteilen wollen und wobei die dezentrale Computereinheit des interessierten Moduls auf die Daten reagiert.

2. Verfahren nach Anspruch 1,
**dadurch gekennzeichnet,**
**dass** ein Objektfilter von einem Mikrocomputer realisiert wird, auf dem ein entsprechendes Programm läuft und der dem jeweiligen Subsystem respektive der Schnittstelle zugeordnet ist

3. Verfahren nach Anspruch 1 oder 2,
**dadurch gekennzeichnet,**
**dass** der Objektfilter die Kommunikation und die Datenverteilung zwischen den Subsystemen durchführt.

4. Verfahren nach einem der vorherigen Ansprüche,
**dadurch gekennzeichnet,**
**dass** der Objektfilter selbständig Daten anderer Subsysteme sammelt und dem ihm zugeordneten Subsystem als Datenpaket bereit stellt.

5. Verfahren nach einem der vorherigen Ansprüche,
**dadurch gekennzeichnet,**
**dass** die Subsysteme über den Austausch von Nachrichten miteinander kommunizieren, wobei die Nachrichten im Netz abgelegt werden ("publish") und wobei die Nachrichten von einem davon betroffenen Subsystem aufgegriffen werden ("subscribe").

6. Verfahren nach Anspruch 5,
**dadurch gekennzeichnet,**
**dass** der Objektfilter das ihm zugeordnete Subsystem bei Auftreten einer relevanten Nachricht oder eines Ereignisses unterrichtet.

7. Verfahren nach einem der vorherigen Ansprüche,
**dadurch gekennzeichnet,**
**dass** der Objektfilter selbständig Daten von Subsystemen sammelt, die von dem ihm zugeordneten Subsystems angefordert werden.

8. Verfahren nach einem der vorherigen Ansprüche,
**dadurch gekennzeichnet,**
**dass** ein zu verarbeitendes Objekt während der gesamten Lebensdauer zur Verarbeitung an ein Subsystem gebunden ist und von anderen Subsystemen nicht bearbeitet wird.

9. Verfahren nach einem der vorherigen Ansprüche,
**dadurch gekennzeichnet,**
**dass** die Kombination aus Subsystem, also aus Applikation oder Modul, und Objektfilter als eine Entität zu betrachtet wird, die prozess-individuelle Daten der Postsendungen während der gesamten Durchlaufzeit transportieren und diese jederzeit für anfordernde Prozesse bereitstellen.

10. Verfahren nach einem der vorherigen Ansprüche,
**dadurch gekennzeichnet,**
**dass** ein Objektfilter aktuelle Information über das ihm zugeordnete Subsystems, insbesondere über Leistungszahlen und Kenngrößen, sammelt und diese Information anderen Subsystemen, insbesondere einer administrativen oder grafischen Komponente, über das Backbone zur Verfügung stellt.

11. Verfahren nach einem der vorherigen Ansprüche,
**dadurch gekennzeichnet,**
**dass** mit jeder Postsendung ein Objekt erzeugt, das alle Merkmale, wie Eigenschaften, Ereignisse und Methoden, abbildet.

12. Verfahren nach einem der vorherigen Ansprüche,
**dadurch gekennzeichnet,**
**dass** neben der beschriebenen dezentralen Datenverarbeitung ein zentraler Datenpool an das Netz angeschlossen ist, wobei in dem Datenpool Echtzeit- und Nicht-Echtzeit-Prozessdaten gespeichert werden.

13. Verfahren nach einem der vorherigen Ansprüche,
**dadurch gekennzeichnet,**
**dass** der Objektfilter sämtliche Aufgaben zur Lastverteilung innerhalb einer Applikationsgruppe durchführt.

14. System zur Durchführung des Verfahrens nach einem der vorherigen Ansprüche,
**gekennzeichnet durch**
ein Netzwerk und an das Netzwerk angeschlossene Subsysteme, wobei die Subsysteme über jeweils mindestens eine Filterfunktion in Form eines Objektfilters an das Netzwerk angeschlossen sind und wobei jeder Objektfilter von einem Mikrocomputer realisiert ist, auf dem ein eigenständiges Computerprogramm läuft.

## Claims

1. A method for the automatic organization of a plurality sub-systems interlinked over a network for data transmission, particularly for organizing the distribution of postal items in a letter center, wherein a subsystem has a module, wherein one interface is provided in each case for the interlinking of a subsystem to the network,
**characterized in that**
said interface is organized by a decentralized computer unit associated with said subsystem, which performs a filter function in the form of an object filter, wherein the data stream, which is not an e-mail data stream, between said network and said module runs through said decentralized computer unit, wherein individual modules provide data in said network which they want to communicate to modules unknown to them interested in said data, and wherein the decentralized computer unit of said interested modules responds to said data.

2. The method according to claim 1,
**characterized in that**
an object filter is realized by a microcomputer on which a corresponding program runs and is associated with said respective subsystem or said interface.

3. The method according to claim 1 or 2,
**characterized in that**
said object filter performs the communication and the data distribution between said subsystems.

4. The method according to one of the preceding claims,
**characterized in that**
said object filter independently collects data of other subsystems and provides as data packet to the subsystem associated with it.

5. The method according to one of the preceding claims,
**characterized in that**
said subsystems communicate with each other through the exchange of messages, wherein the messages are filed ("publish") in said network and wherein said messages are picked up by an subsystem affected therefrom ("subscribe").

6. The method according to claim 5,
**characterized in that**
said object filter informs said subsystem associated with it upon the occurrence of a relevant message or an event.

7. The method according to one of the preceding claims,
**characterized in that**
said object filter collects independently data from subsystems requested by the subsystem associated with it.

8. The method according to one of the preceding claims,
**characterized in that**
an object to be processed during its entire lifetime is bound to a subsystem for processing and is not processed by other subsystems.

9. The method according to one of the preceding claims,
**characterized in that**
the combination of subsystem, therefore of application or module, and object filter is to be regarded as an entity, which transports the individual process data of the postal items during the entire running time and provides these at any time to requesting processes .

10. The method according to one of the previous claims,
**characterized in that**
an object filter collects current information over the subsystems associated with it, in particular about performance factors and parameters and provides this information to other subsystems, particularly to an administrative or graphic component over the backbone.

11. The method according to one of the preceding claims,
**characterized in that**
with each postal item an object generates which displays all features such as characteristics, events and methods.

12. The method according to one of the preceding claims,
**characterized in that**,
in addition to the described decentralized data processing a central data pool is connected to said network, wherein in said data pool real time and non-real-time process data are stored.

13. The method according to one of the preceding claims,
**characterized in that**
said object filter performs all tasks for load sharing within an application group.

14. A system, for performing the method according to one of the previous claims,
**characterized by**
a network and subsystems connected to said network, wherein said subsystems are connected to said network over at least one filter function in the form of an object filter and wherein each object filter is realized by a microcomputer on which an independent computer program runs.

## Revendications

1. Procédé d'organisation automatique de plusieurs sous-systèmes couplés par un réseau pour la transmission de données, notamment pour l'organisation de la distribution d'envois postaux dans un centre de courrier, dans lequel un sous-système présente un module et dans lequel il est prévu, pour le couplage d'un sous-système au réseau, respectivement une interface,
**caractérisé en ce que**
l'interface est organisée par une unité informatique décentralisée associée au sous-système et exerçant une fonction de filtrage sous forme d'un filtre d'objet, le flux de données, qui n'est pas un flux de données e-mail, entre le réseau et le module passant par l'unité informatique décentralisée, tandis que des réseaux distincts rentrent dans le réseau des données qu'ils veulent communiquer à des modules inconnus d'eux et intéressés par les données et que l'unité informatique décentralisée du module intéressé réagit aux données.

2. Procédé selon la revendication 1,
**caractérisé en ce que**
un filtre d'objet est constitué par un micro-ordinateur sur lequel fonctionne un programme correspondant et qui est associé au sous-système respectif concernant l'interface.

3. Procédé selon la revendication 1 ou 2,
**caractérisé en ce que**
le filtre d'objet assure la communication et la distribution de données entre les sous-systèmes.

4. Procédé selon une des revendications précédentes,
**caractérisé en ce que**
le filtre d'objet rassemble de manière indépendante les données des autres sous-systèmes et les met à disposition du sous-système qui lui est associé sous forme de paquet de données.

5. Procédé selon une des revendications précédentes,
**caractérisé en ce que**
les sous-systèmes communiquent par l'échange d'informations entre eux, ces informations étant enregistrées dans le réseau (« publication ») et ces informations étant captées par un sous-système concerné par ceci (« souscription »).

6. Procédé selon la revendication 5,
**caractérisé en ce que**
le filtre d'objet informe le sous-système qui lui est associé en cas de survenance d'une information pertinente ou d'un événement.

7. Procédé selon une des revendications précédentes,
**caractérisé en ce que**
le filtre d'objet rassemble de manière indépendante les données de sous-systèmes qui sont demandées par le sous-système qui lui est associé.

8. Procédé selon une des revendications précédentes,
**caractérisé en ce que**
un objet à traiter est rattaché pour son traitement pendant toute sa durée de vie à un sous-système et n'est pas traité par les autres sous-systèmes.

9. Procédé selon une des revendications précédentes,
**caractérisé en ce que**
la combinaison d'un sous-système, donc de l'application ou du module, et du filtre d'objet est considérée comme une entité que des données propres au processus des envois postaux transportent pendant tout le temps de circulation et mettent à disposition à tout moment pour les processus l'exigeant.

10. Procédé selon une des revendications précédentes,
**caractérisé en ce que**
un filtre d'objet rassemble des informations à jour sur le sous-système qui lui est associé, notamment sur les indices de capacité et les caractéristiques et met ces informations à disposition d'autres sous-systèmes, notamment d'un composant administratif ou graphique, par le réseau de base.

11. Procédé selon une des revendications précédentes,
**caractérisé en ce que**,
qu'il est généré avec chaque envoi postal un objet qui représente toutes les caractéristiques, comme les propriétés, les événements et les méthodes.

12. Procédé selon une des revendications précédentes,
**caractérisé en ce que**,
outre le traitement décentralisé décrit des données, un pool de données centralisé est raccordé au réseau, des données de traitement en temps réel et non en temps réel étant enregistrées dans le pool de données.

13. Procédé selon une des revendications précédentes,
**caractérisé en ce que**
le filtre d'objet exécute toutes les tâches de distribution de charge au sein d'un groupe d'application.

14. Système de réalisation du procédé selon une des revendications précédentes,
**caractérisé par**
un réseau et des sous-systèmes raccordés à ce réseau, les sous-systèmes étant raccordés respectivement par au moins une fonction de filtrage sous forme d'un filtre d'objet au réseau et chaque filtre d'objet étant constitué par un micro-ordinateur sur lequel fonctionne un programme informatique autonome.
